# EUROPÄISCHE PATENTSCHRIFT

(11) **EP 3 523 346 B1**
(45) Veröffentlichungstag und Bekanntmachung des Hinweises auf die Patenterteilung: **03.09.2025**
(21) Anmeldenummer: 17772745.0
(22) Anmeldetag: 02.10.2017
(51) Int. Cl.: C08F 212/10, B01J 19/24

(54) **VERFAHREN UND SYSTEM ZUR HERSTELLUNG EINES POLYMERS**
METHOD AND SYSTEM FOR PRODUCING A POLYMER
PROCÉDÉ ET SYSTÈME POUR LA PRÉPARATION D'UN POLYMÈRE

(30) Priorität: 04.10.2016 EP 16192168
(43) Veröffentlichungstag der Anmeldung: 14.08.2019
(73) Patentinhaber: INEOS Styrolution Group GmbH, 60325 Frankfurt am Main (DE)
(72) Erfinder: FISCHER, Wolfgang, 69124 Heidelberg (DE); ITTEMANN, Peter, 67125 Dannstadt-Schauernheim (DE); PATCAS, Florian, 67065 Ludwigshafen (DE); RUF, Michael, 68723 Schwetzingen (DE)
(74) Vertreter: Jacobi, Markus Alexander
(86) Internationale Anmeldenummer: PCT/EP2017/074941
(87) Internationale Veröffentlichungsnummer: WO 2018/065347

(56) Entgegenhaltungen:
- JP-A- 2009 007 304
- US-A- 3 597 498
- US-A- 4 555 384
- US-A- 4 555 384
- HANNA MOUAZIZ ET AL: "Synthesis of porous microspheres via self-assembly of monodisperse polymer nanospheres", JOURNAL OF MATERIALS CHEMISTRY, vol. 14, no. 15, 3 June 2004 (2004-06-03), GB, pages 2421, XP055419918, ISSN: 0959-9428, DOI: 10.1039/b404862h
- "Organikum, Organisch-chemisches Grundpraktikum, 21. Auflage", 26 January 2001, WILEY-VCH, ISBN: 978-3-527-29985-0, article HEINZ G.O. BECKER ET AL: "Organikum, Organisch-chemisches Grundpraktikum, 21. Auflage", pages: 56 - 57, XP055504029
- SHINJI YAMADA ET AL: "-lactic acid using a Dean?Stark apparatus for a non-thermal microwave polymerization effect induced by the electric field", POLYMER CHEMISTRY, vol. 5, no. 18, 1 January 2014 (2014-01-01), Cambridge, pages 5283 - 5288, XP055503869, ISSN: 1759-9954, DOI: 10.1039/C4PY00639A
- HANNA MOUAZIZ ET AL: "Synthesis of porous microspheres via self-assembly of monodisperse polymer nanospheres", JOURNAL OF MATERIALS CHEMISTRY, vol. 14, no. 15, 3 June 2004 (2004-06-03), GB, pages 2421, XP055419918, ISSN: 0959-9428, DOI: 10.1039/b404862h

## Beschreibung

Die Erfindung betrifft ein Verfahren zur Herstellung eines Polymers aus mindestens einer ersten Komponente und einer zweiten Komponente mittels eines Reaktors, wobei in dem Reaktor entstehende Reaktionswärme über einen Siedekühler abgeführt wird, indem in dem Reaktor entstehende gasförmige Brüden dem Siedekühler zugeführt werden. Die Erfindung betrifft auch ein System zur Herstellung eines Polymers aus mindestens einer ersten Komponente und einer zweiten Komponente, welches einen Reaktor und einen Siedekühler zur Abführung von in dem Reaktor entstehender Reaktionswärme umfasst.

Es ist bekannt, Polymere, insbesondere Styrol-Copolymere wie Styrol-Acrylnitril-Copolymer (SAN) oder alpha-Methylstyrol-Acrylnitril-Copolymer (AMSAN) in einem Reaktor, welcher ein Rührwerk aufweist, herzustellen. Ein solcher Reaktor wird in der Literatur auch als "CSTR" (continuous stirred tank reactor) bezeichnet. Dabei werden mindestens zwei Komponenten, insbesondere Monomere, dem Reaktor zugeführt, und innerhalb des Reaktors findet dann eine Polymerisation statt.

Aus EP-B 1297038 ist es bekannt, kautschukhaltige Styrolpolymeren wie AcrylnitrilButadien-Styrol (ABS) oder Acrylnitril-Styrol-Acrylat (ASA) aus einer Kautschukphase und einer Hartphase herzustellen. Als Hartphase eignen sich dabei insbesondere Styrol-Acrylnitril-Copolymer (SAN) sowie alpha-Methylstyrol-Acrylnitril-Copolymer (AMSAN). Die Hartphase wird durch Polymerisation von Monomeren hergestellt.

Aus EP-B 2802619 ist eine thermoplastische Formmasse bekannt, welche unter anderem ein Terpolymer als Komponente aufweist. Das Terpolymer enthält dabei Acrylnitril (AN), alpha-Methylstyrol und Styrol (S). Das Terpolymer wird dabei hergestellt, indem die Monomere in einer radikalischen Lösungsmittel-Polymerisation bei Temperaturen von 100°C bis 140°C umgesetzt werden, und anschließend in einem Rohrbündelreaktor bei einem Druck von kleiner als 50 mbar der Restmonomergehalt auf weniger als 3000 ppm reduziert wird.

Ein Reaktor für Polymerisationen wird beispielsweise in EP-A 0865820 offenbart. Der Reaktor umfasst einen Deckel, einen Boden sowie ein Rührwerk. Der Reaktor umfasst Zuleitungen, über welche die Komponenten dem Reaktor zugeführt werden. In dem Reaktor findet die Polymerisation statt, und das entstandene Polymer wird über Ableitungen aus dem Reaktor entnommen.

Die US-A 4,555,384 offenbart eine Vorrichtung zur kontinuierlichen Massenpolymerisation von Styrol- und Alkenylnitril-Monomeren zur Herstellung eines Styrol/Alkenylnitril-Copolymers. Die Vorrichtung umfasst ein Reaktionsgefäß, ein Mittel zum kontinuierlichen Zuführen eines vorbestimmten Monomerenverhältnisses, ein Mittel, um das Reaktionsgemisch Temperatur- und Druckbedingungen auszusetzen, einen Rotationsrührer, um das Reaktionsgemisch horizontal zu rühren, ein Mittel, um das Reaktionsgemisch vertikal zu rühren, ein Mittel zum Kühlen des Reaktionsgemisches durch Abziehen einer Dampfphase aus dem Reaktionsgefäß, und ein Mittel zum kontinuierlichen Abziehen von Styrol/Alkenylnitril-Copolymer aus dem Reaktionsgefäß.

Verfahren und Systeme zur Herstellung von Polymeren sind auch aus den Druckschriften US 3,737,288, US 7,745,552, US 7,750,095, US 8,148,480 sowie EP-A 1034201, beziehungsweise WO 99/25749 bekannt.

Die Polymerisation ist in der Regel eine exotherme Reaktion, es entsteht Reaktionswärme. Die entstehende Reaktionswärme wird beispielsweise über einen Siedekühler abgeführt. Als Siedekühler kommt bevorzugt ein Rohrbündelwärmetauscher in Frage. In dem Siedekühler steigen die in dem Reaktor entstehenden gasförmigen Brüden in Rohren auf. Die Rohre werden dabei von einem Kühlmittel umspült, und dadurch kondensieren die Brüden.

In dem hergestellten und als Granulat vorliegenden Polymer kann es zur Bildung von roten Partikeln kommen. Ferner können Oberflächendefekte bei Werkstücken auftreten, die durch Spritzguss aus dem Granulat erzeugt werden.

Der Erfindung liegt als eine Aufgabe zugrunde, bei der Herstellung eines Polymers mittels eines Reaktors und eines Siedekühlers die Bildung von roten Partikeln sowie Polymerisat, das zu Oberflächendefekten bei Werkstücken führt, die durch Spritzguss aus dem Polymer erzeugt werden, zu verringern oder zu vermeiden, und dabei die Qualität des hergestellten Polymers zu erhöhen.

Diese Aufgabe wird erfindungsgemäß durch ein Verfahren zur Herstellung eines Polymers aus mindestens einer ersten Komponente und einer zweiten Komponente mit den Merkmalen der Ansprüche gelöst. Die Erfindung betrifft insbesondere ein Verfahren zur Herstellung eines Polymers aus mindestens einer ersten Komponente und einer zweiten Komponente mittels eines Reaktors, wobei:
in dem Reaktor entstehende Reaktionswärme über einen Siedekühler abgeführt wird, indem in dem Reaktor entstehende gasförmige Brüden dem Siedekühler zugeführt werden, wobei ein kondensierte Brüden enthaltender Produktstrom von dem Siedekühler über ein Abscheidegefäß in den Reaktor zurück geführt wird, der Produktstrom vor dem Eintritt in das Abscheidegefäß in einem Wärmetausche gekühlt wird, wobei die erste Komponente und/oder die zweite Komponente zumindest teilweise über den Siedekühler zugeführt werden und von dem Siedekühler über das Abscheidegefäß in den Reaktor gelangen, wobei in dem Abscheidegefäß eine wässrige Phase von dem Produktstrom abgetrennt wird und wobei der Produktstrom von dem Abscheidegefäß mit der Schwerkraft in den Reaktor fließt..

Gemäß einem gattungsgemäßen Verfahren zur Herstellung eines Polymers aus mindestens einer ersten Komponente und einer zweiten Komponente mittels eines Reaktors wird in dem Reaktor entstehende Reaktionswärme über einen Siedekühler abgeführt, indem in dem Reaktor entstehende gasförmige Brüden dem Siedekühler zugeführt werden.

Erfindungsgemäß wird dabei ein Produktstrom, der kondensierte Brüden enthält, von dem Siedekühler über ein Abscheidegefäß in den Reaktor zurückgeführt, wobei in dem Abscheidegefäß eine wässrige Phase von dem Produktstrom abgetrennt wird. Die wässrige Phase setzt sich dabei unten in dem Abscheidegefäß ab. Somit wird der Produktstrom, welcher oberhalb der wässrigen Phase das Abscheidegefäß verlässt, dem Reaktor zugeführt.

Überraschend wurde gefunden, dass die Bildung von roten Partikeln sowie von weiteren Bestandteilen, die zu Oberflächendefekten bei Werkstücken, die durch Spritzguss aus dem Polymer erzeugt werden, verringert werden kann, wenn der Produktstrom aus dem Siedekühler über das Abscheidegefäß geleitet wird und die wässrige Phase von dem Produktstrom abgetrennt wird, bevor der Produktstrom mit den kondensierten Brüden in den Reaktor zurückgeführt wird. Auch bilden sich weniger Anwachsungen und Ablagerungen von Polymer in dem Reaktor.

Die erste Komponente sowie die zweite Komponente, aus welchen das (Co)Polymer hergestellt wird, enthalten insbesondere Monomere, oder bestehen aus diesen. Solche Monomere sind beispielsweise Styrol, und/oder alpha-Methylstyrol einerseits und Acrylnitril und/oder Methacrylsäureester (wie Methylmethacrylat) andererseits.

Das erfindungsgemäße Verfahren kann vorteilhaft zur Herstellung von Styrol-Acrylnitril-Copolymer (SAN) verwendet werden. Dabei enthält die erste Komponente Styrol (bzw. besteht daraus), und die zweite Komponente enthält Acrylnitril (bzw. besteht daraus).

Bevorzugte Mischungsverhältnisse (w/w) sind dabei 90 Anteile Styrol zu 10 Anteilen Acrylnitril bis 60 Anteile Styrol zu 40 Anteilen Acrylnitril.

Das erfindungsgemäße Verfahren kann auch vorteilhaft zur Herstellung von Alpha-Methylstyrol-Acrylnitril-Copolymer (AMSAN) verwendet werden. Dabei enthält die zweite Komponente Acrylnitril, und die erste Komponente enthält Alpha-Methylstyrol. Bevorzugte Mischungsverhältnisse sind dabei 80 Anteile Alpha-Methylstyrol zu 20 Anteilen Acrylnitril bis 60 Anteile Alpha-Methylstyrol zu 40 Anteilen Acrylnitril.

Das erfindungsgemäße Verfahren kann auch vorteilhaft zur Herstellung von Styrol-Methylmethacrylat-Copolymer (SMMA) verwendet werden. Dabei enthält die erste Komponente Styrol, und die zweite Komponente enthält Methylmethacrylat (MMA).

Es ist auch denkbar, mehr als zwei Komponenten, beziehungsweise mehr als zwei Monomere zu verwenden. Insbesondere können Terpolymere aus drei Monomeren mittels des erfindungsgemäßen Verfahrens hergestellt werden.

Beispielsweise kann ein Terpolymer aus den Monomeren Acrylnitril, Styrol und Alpha-Methylstyrol mittels des erfindungsgemäßen Verfahrens hergestellt werden.

Gemäß der Erfindung wird der Produktstrom vor dem Eintritt in das Abscheidegefäß in einem Wärmetauscher, gekühlt.

Gemäß einer bevorzugten Ausgestaltung der Erfindung wird in dem Abscheidegefäß auch eine unmittelbar oberhalb der wässrigen Phase entstehende Trennschicht gemeinsam mit der wässrigen Phase von dem Produktstrom abgetrennt. Der Produktstrom, welcher oberhalb der Trennschicht das Abscheidegefäß verlässt, wird dem Reaktor zugeführt.

Gemäß der Erfindung werden die erste Komponente und/oder die zweite Komponente zumindest teilweise über den Siedekühler zugeführt, und die in den Siedekühler eingefüllte erste Komponente und/oder zweite Komponente gelangen von dem Siedekühler über das Abscheidegefäß in den Reaktor.

Vorzugsweise werden die erste Komponente und/oder die zweite Komponente zumindest teilweise von oben durch eine Haube des Siedekühlers in den Siedekühler eingefüllt. Die Haube des Siedekühlers ist dabei in einem oberen Bereich angeordnet und schließt den Siedekühler nach oben ab. Die erste Komponente und/oder die zweite Komponente werden somit mit der Schwerkraft in den Siedekühler eingebracht und fallen aufgrund der Schwerkraft in den Siedekühler hinein.

Bevorzugt werden die erste Komponente und/oder die zweite Komponente zumindest teilweise von oben in mehrere vertikal verlaufende Rohre des Siedekühlers gefüllt. In diesen Rohren kondensieren die aus dem Reaktor aufsteigenden Brüden. Die erste Komponente und/oder die zweite Komponente werden also derart in den Siedekühler eingefüllt, dass die erste Komponente und/oder die zweite Komponente in die besagten Rohre fallen.

Gemäß einer weiteren vorteilhaften Ausgestaltung der Erfindung werden die erste Komponente und/oder die zweite Komponente auch teilweise direkt dem Reaktor zugeführt. Besonders bevorzugt werden die erste Komponente und/oder die zweite Komponente zumindest teilweise in flüssiger Form dem Siedekühler und/oder dem Reaktor zugeführt. Die erste Komponente und/oder die zweite Komponente fließen somit in den Siedekühler und/oder in den Reaktor hinein.

Beispielsweise werden die erste Komponente und/oder die zweite Komponente dabei zumindest teilweise mit einem Lösemittel gemischt. Als Lösemittel kommen beispielsweise Ethylbenzol (EB) und Toluol zum Einsatz. Ein weiteres geeignetes Lösemittel ist Methylethylketon. Das Lösemittel kann dabei einer stromabwärts des Reaktors angeordneten Kondensationseinheit, vorzugsweise über einen Sammelbehälter, entnommen werden. Auch nicht umgesetzte Monomere der ersten Komponente und der zweiten Komponente können der Kondensationseinheit, vorzugsweise über den Sammelbehälter, entnommen werden.

Gemäß einer vorteilhaften Ausgestaltung der Erfindung werden das Lösemittel nach Kondensation sowie kondensierte, nicht umgesetzte Monomere der ersten Komponente und/oder der zweiten Komponente von der Kondensationseinheit über eine Rückführleitung in den Siedekühler zurückgeführt. Das Lösemittel befindet sich somit ständig in einem Umlauf.

Die bei der in dem Reaktor stattfindenden Polymerisation entstehenden gasförmigen Brüden steigen entgegen der Schwerkraft in den vertikal verlaufenden Rohren des Siedekühlers auf und kondensieren in dem Siedekühler. Der Produktstrom, welcher kondensierte Brüden und gegebenenfalls die erste Komponente und/oder die zweite Komponente enthält, fließt anschließend mit der Schwerkraft in das Abscheidegefäß. Der das Abscheidegefäß verlassende Produktstrom fließt ebenfalls mit der Schwerkraft in den Reaktor.

Die Aufgabe wird erfindungsgemäß auch durch ein System zur Herstellung eines Polymers aus mindestens einer ersten Komponente und einer zweiten Komponente mit den folgenden Merkmalen gelöst, umfassend:
einen Reaktor und einen Siedekühler zur Abführung von in dem Reaktor entstehender Reaktionswärme, dadurch gekennzeichnet, dass
zwischen dem Siedekühler und dem Reaktor ein Abscheidegefäß derart angeordnet ist, dass ein kondensierte Brüden enthaltender Produktstrom von dem Siedekühler über das Abscheidegefäß in den Reaktor zurück geführt wird, dass zwischen dem Siedekühler und dem Abscheidegefäß ein Wärmetauscher derart angeordnet ist, dass der Produktstrom vor dem Eintritt in das Abscheidegefäß in dem Wärmetauscher gekühlt wird, und dass der Reaktor, der Siedekühler und das Abscheidegefäß derart angeordnet sind, dass der Produktstrom von dem Abscheidegefäß mit der Schwerkraft in den Reaktor fließt, wobei der Siedekühler mindestens eine Einfüllöffnung zum Einfüllen der ersten Komponente und/oder der zweiten Komponente aufweist, und wobei der Reaktor, der Siedekühler und das Abscheidegefäß derart angeordnet sind, dass in dem Reaktor entstehende Brüden entgegen der Schwerkraft in den Siedekühler aufsteigen, und dass der Produktstrom mit der Schwerkraft in das Abscheidegefäß fließt.

Ein gattungsgemäßes System zur Herstellung eines Polymers aus mindestens einer ersten Komponente und einer zweiten Komponente umfasst einen Reaktor, in welchem die Polymerisation stattfindet, und einen Siedekühler zur Abführung von in dem Reaktor entstehender Reaktionswärme.

Der Reaktor ist derart mit dem Siedekühler verbunden, dass in dem Reaktor entstehende Reaktionswärme über den Siedekühler abgeführt wird, indem in dem Reaktor entstehende gasförmige Brüden dem Siedekühler zugeführt werden.

Erfindungsgemäß ist dabei zwischen dem Siedekühler und dem Reaktor ein Abscheidegefäß derart angeordnet, dass ein kondensierte Brüden enthaltender Produktstrom von dem Siedekühler, insbesondere von dem Boden des Siedekühlers, über das Abscheidegefäß in den Reaktor zurückgeführt wird. Das Abscheidegefäß dient dabei zur Abtrennung einer wässrigen Phase von dem Produktstrom.

Gemäß der Erfindung ist zwischen dem Siedekühler und dem Abscheidegefäß ein Wärmetauscher derart angeordnet, dass der Produktstrom vor dem Eintritt in das Abscheidegefäß in dem Wärmetauscher gekühlt wird.

Gemäß der Erfindung weist der Siedekühler mindestens eine Einfüllöffnung zum Einfüllen der ersten Komponente und/oder der zweiten Komponente auf. Die in den Siedekühler eingefüllte erste Komponente und/oder zweite Komponente gelangen somit von dem Siedekühler in den Reaktor.

Bevorzugt ist die mindestens eine Einfüllöffnung in einer Haube des Siedekühlers angeordnet. Die Haube des Siedekühlers ist dabei in einem oberen Bereich angeordnet und schließt den Siedekühler nach oben ab. Somit können die erste Komponente und/oder die zweite Komponente von oben durch die Haube des Siedekühlers in den Siedekühler eingefüllt werden und fallen aufgrund der Schwerkraft in den Siedekühler hinein.

Vorzugsweise sind in der Haube des Siedekühlers Düsen angebracht. Die Düsen sind dabei derart angeordnet, dass die durch die mindestens eine Einfüllöffnung eingefüllte erste Komponente und/oder zweite Komponente von oben in vertikal verlaufende Rohre des Siedekühlers fallen und vorzugsweise über alle Rohre verteilt werden. In diesen Rohren kondensieren die aus dem Reaktor aufsteigenden Brüden.

Vorteilhaft ist ferner eine Rückführleitung zur Zuführung eines Lösemittels von einer stromabwärts des Reaktors angeordneten Kondensationseinheit zu dem Siedekühler vorgesehen. Das Gemisch aus Lösemittel und kondensierten, nicht umgesetzten Monomeren, fließt somit, zumindest teilweise, zusammen mit der ersten Komponente und/oder zweiten Komponente in den Siedekühler.

Erfindungsgemäß sind der Reaktor, der Siedekühler und das Abscheidegefäß derart angeordnet, dass in dem Reaktor entstehende gasförmige Brüden entgegen der Schwerkraft in den Siedekühler aufsteigen, dort kondensieren, und ein Produktstrom, welcher in dem Siedekühler kondensierte Brüden und gegebenenfalls die erste Komponente und/oder die zweite Komponente enthält, mit der Schwerkraft in das Abscheidegefäß fließt.

Auch sind der Reaktor, der Siedekühler und das Abscheidegefäß derart angeordnet, dass der Produktstrom von dem Abscheidegefäß mit der Schwerkraft in den Reaktor fließt.

Mittels des erfindungsgemäßen Verfahrens sowie mittels des erfindungsgemäßen Systems sind insbesondere Styrol-Acrylnitril-Copolymer (SAN), Alpha-Methylstyrol-Acrylnitril-Copolymer (AMSAN) oder Styrol-Methylmethacrylat-Copolymer (SMMA), aber auch andere Polymere bzw. Copolymere vorteilhaft herstellbar.

Vorteilhaft kann das mittels des erfindungsgemäßen Verfahrens hergestellte Polymer mit Kautschuk und/oder Polycarbonat (PC) und/oder Polyamid (PA) abgemischt werden.

Ausführungsformen der Erfindung werden anhand der folgenden Zeichnung, der nachfolgenden Beschreibung und der Ansprüche näher erläutert.

Es zeigt:
- Figur 1: : eine schematische Darstellung eines Systems zur Herstellung eines Polymers und
- Figur 2: : eine detaillierte schematische Darstellung eines unteren Bereichs des Siedekühlers des Systems zur Herstellung eines Polymers aus Figur 1.

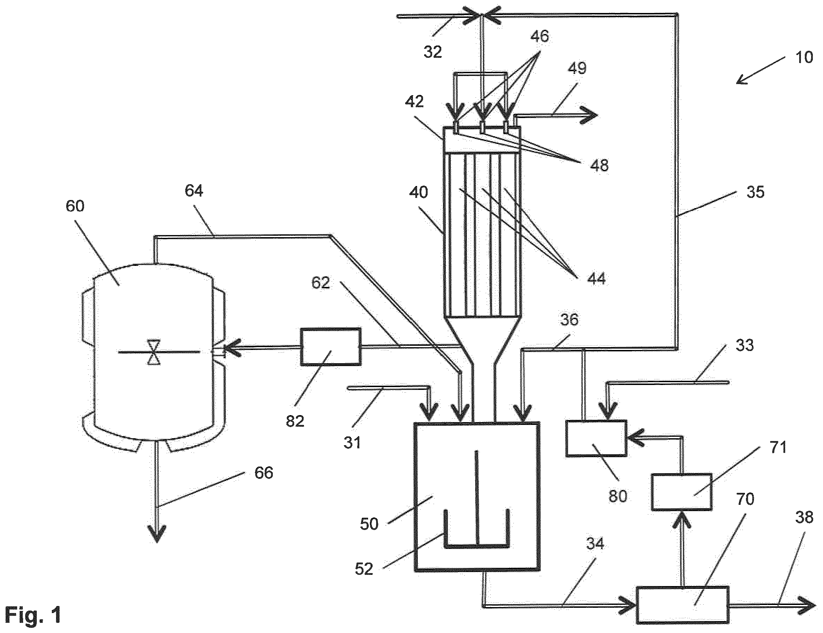

In Figur 1 ist eine schematische Schnittdarstellung eines Systems 10 zur Herstellung eines Polymers aus mindestens einer ersten Komponente und einer zweiten Komponente dargestellt.

Das System 10 dient insbesondere, aber nicht ausschließlich, zur Herstellung von Styrol-Acrylnitril-Copolymer (SAN), Alpha-Methylstyrol-Acrylnitril-Copolymer (AMSAN) sowie Styrol-Methylmethacrylat-Copolymer (SMMA).

Das System 10 umfasst einen Reaktor 50. In dem Reaktor 50 findet eine Polymerisation von zugeführten Monomeren statt. Innerhalb des Reaktors 50 ist ein Rührer 52 angeordnet. Der Rührer 52 ist mittels eines hier nicht dargestellten Elektromotors rotatorisch antreibbar. Es sind auch andere Arten von Reaktoren 50 einsetzbar, in welchen eine Polymerisation von zugeführten Monomeren stattfinden kann.

An den Reaktor 50 ist eine erste Zuführleitung 31 angeschlossen. Die erste Zuführleitung 31 dient der Zuführung von Komponenten direkt in den Reaktor 50. Die zugeführten Komponenten enthalten insbesondere Monomere. Ferner ist an den Reaktor 50 eine erste Rückführleitung 36 angeschlossen. Die erste Rückführleitung 36 dient zur Zuführung eines Lösemittels sowie von bei der Entgasung abgetrennter, nicht umgesetzter Monomere. Das Lösemittel stammt dabei aus einer Kondensationseinheit 71, auf welche an späterer Stelle noch eingegangen wird.

Weiter ist eine Ausgangsleitung 34 an den Reaktor 50 angeschlossen. Mittels der Ausgangsleitung 34 kann in dem Reaktor 50 entstandene Polymermasse abgelassen werden. Stromabwärts des Reaktors 50 ist eine Entgasungseinheit 70 angeordnet und mit der Ausgangsleitung 34 verbunden. Aus dem Reaktor 50 über die Ausgangsleitung 34 abgelassene Polymermasse gelangt somit in die stromabwärts angeordnete Entgasungseinheit 70.

Die Entgasungseinheit 70 dient insbesondere zur Entfernung von flüchtigen Bestandteilen aus der Polymermasse, insbesondere Lösemittel und nicht umgesetzter Monomere. An die Entgasungseinheit 70 ist eine Entnahmeleitung 38 angeschlossen. Über die Entnahmeleitung 38 kann das hergestellte Polymer, welches nunmehr zumindest weitgehend frei von nicht umgesetzten Monomeren und Lösemittel ist, dem System 10 entnommen werden.

Die Entgasungseinheit 70 ist auch mit der Kondensationseinheit 71 verbunden. Der Kondensationseinheit 71 werden Lösemittel und nicht umgesetzte Monomere, welche in der Entgasungseinheit 70 aus der Polymermasse entfernt wurden, zugeführt. In der Kondensationseinheit 71 kondensieren das Lösemittel und die nicht umgesetzten Monomere.

Die Kondensationseinheit 71 ist mit einem Sammelbehälter 80 verbunden. Dem Sammelbehälter 80 werden das kondensierte Lösemittel und die kondensierten, nicht umgesetzte Monomere aus der Kondensationseinheit 71 zugeführt.

An den Sammelbehälter 80 ist ferner eine Einfüllleitung 33 angeschlossen, welche zum Einfüllen oder Nachfüllen von Lösemittel dient.

Die erste Rückführleitung 36, die an den Reaktor 50 angeschlossen ist, und welche zur Zuführung des Lösemittels und der nicht umgesetzten Monomere zu dem Reaktor 50 dient, ist auch mit dem Sammelbehälter 80 verbunden. Über die erste Rückführleitung 36 kann somit das in dem Sammelbehälter 80 vorhandene Lösemittel sowie die nicht umgesetzten Monomere teilweise in den Reaktor 50 zurückgeführt werden.

Das System 10 umfasst ferner einen Siedekühler 40. Der Siedekühler 40 dient zur Abführung von Reaktionswärme, die bei der Polymerisation in dem Reaktor 50 entsteht. Der Siedekühler 40 ist vorliegend als Rohrbündelwärmetauscher ausgestaltet und umfasst mehrere vertikal verlaufende Rohre 44. Der Siedekühler 40 ist oben, also an einer dem Erdboden abgewandten Seite, mit einer Haube 42 verschlossen. Ferner umfasst der Siedekühler 40 einen hier nicht dargestellten Kühlmittelzulauf und einen hier ebenfalls nicht dargestellten Kühlmittelablauf.

Der Reaktor 50 ist derart mit dem Siedekühler 40 verbunden, dass die in dem Reaktor 50 bei der Polymerisation entstehende Reaktionswärme über den Siedekühler 40 abgeführt werden kann. Dabei werden in dem Reaktor 50 entstehende gasförmige Brüden dem Siedekühler 40 zugeführt, welche in dem Siedekühler 40 kondensieren.

Zwischen dem Siedekühler 40 und dem Reaktor 50 ist ein Abscheidegefäß 60 angeordnet. Das Abscheidegefäß 60 dient zur Abtrennung einer wässrigen Phase von einem Produktstrom, welcher kondensierte Brüden aus dem Siedekühler enthält. Der Siedekühler 40 ist mittels einer Abscheideleitung 62 mit dem Abscheidegefäß 60 verbunden, und das Abscheidegefäß 60 ist mittels einer Zulaufleitung 64 mit dem Reaktor 50 verbunden. Das Abscheidegefäß 60 ist derart in dem System 10 angeordnet, dass der Produktstrom mit der Schwerkraft von dem Siedekühler 40 durch die Abscheideleitung 62 zu dem Abscheidegefäß 60 und weiter durch die Zulaufleitung 64 in den Reaktor 50 zurückfließt.

Das System 10 umfasst ferner einen Wärmetauscher 82, welcher in der Abscheideleitung 62 zwischen dem Siedekühler 40 und dem Abscheidegefäß 60 angeordnet ist. Der aus dem Siedekühler 40 austretende Produktstrom fließt vor dem Eintritt in das Abscheidegefäß 60 durch den Wärmetauscher 82 und wird in dem Wärmetauscher 82 gekühlt.

Die Zulaufleitung 64 ist an einen oberen Bereich des Abscheidegefäßes 60 angeschlossen. Die Abscheideleitung 62 ist an einen mittleren Bereich des Abscheidegefäßes 60 angeschlossen. An einen unteren Bereich des Abscheidegefäßes 60 ist ein Abfluss 66 angeschlossen, welcher zur Entnahme der wässrigen Phase aus dem Abscheidegefäß 60 dient.

Innerhalb des Siedekühlers 40 steigen die in dem Reaktor 50 entstehenden gasförmigen Brüden in den vertikal verlaufenden Rohren 44 auf. Die Rohre 44 werden dabei von einem Kühlmittel umspült.

Das Kühlmittel wird dem Siedekühler 40 durch den Kühlmittelzulauf zugeführt, umspült die vertikal verlaufenden Rohre 44 und tritt durch den Kühlmittelablauf wieder aus dem Siedekühler 40 aus. Dabei kühlt das Kühlmittel die Rohre 44 sowie darin vorhandene Brüden aus dem Reaktor 50. Dadurch kondensieren die Brüden, und ein Produktstrom, der die kondensierten Brüden enthält, fließt durch die Abscheideleitung 62 in das Abscheidegefäß 60.

In der Haube 42 des Siedekühlers 40 sind eine oder mehrere Einfüllöffnungen 46 angeordnet. Die Einfüllöffnungen 46 in der Haube 42 des Siedekühlers 40 dienen zum Einfüllen von Komponenten in den Siedekühler 40. In der Haube 42 des Siedekühlers 40 können ferner mehrere Düsen 48 vorgesehen sein. Die Düsen 48 sind dabei mit den Einfüllöffnungen 46 verbunden. Komponenten, die durch die Einfüllöffnungen 46 in der Haube 42 des Siedekühlers 40 eingefüllt werden, gelangen somit zu den Düsen 48 in der Haube 42 des Siedekühlers 40.

Die Düsen 48 sind derart in der Haube 42 des Siedekühlers 40 angeordnet, dass Komponenten, die durch die Einfüllöffnungen 46 in den Siedekühler 40 eingefüllt werden, von oben auf alle vertikal verlaufenden Rohre 44 des Siedekühlers 40 verteilt werden. Die durch die Einfüllöffnungen 46 in den Siedekühler 40 eingefüllten Komponenten fallen also mit der Schwerkraft in die vertikal verlaufenden Rohre 44 des Siedekühlers 40, in welchen die Brüden aus dem Reaktor 50 kondensieren.

An die Haube 42 des Siedekühlers 40 ist eine zweite Zuführleitung 32 angeschlossen. Die zweite Zuführleitung 32 dient der Zuführung von Komponenten in den Siedekühler 40. Die zugeführten Komponenten enthalten insbesondere Monomere. Die zweite Zuführleitung 32 ist dabei mit den Einfüllöffnungen 46 in der Haube 42 des Siedekühlers 40 verbunden.

Über die zweite Zuführleitung 32 zugeführte Komponenten gelangen somit über die Einfüllöffnungen 46 zu den Düsen 48 in der Haube 42 des Siedekühlers 40 und von dort in die vertikal verlaufenden Rohre 44.

In die zweite Zuführleitung 32 mündet eine zweite Rückführleitung 35. Die zweite Rückführleitung 35 ist, wie auch die erste Rückführleitung 36, mit dem Sammelbehälter 80 verbunden. Über die zweite Rückführleitung 35 kann somit das in dem Sammelbehälter 80 vorhandene Lösemittel sowie die nicht umgesetzten Monomere ganz oder teilweise in die zweite Zuführleitung 32 geleitet werden. Die zweite Rückführleitung 35 dient somit zur Zuführung eines Lösemittels sowie der nicht umgesetzten Monomere zu dem Siedekühler 40.

An einer Oberseite der Haube 42 des Siedekühlers 40 ist ferner eine Abgasleitung 49 angeschlossen. Über die Abgasleitung 49 können Abgase aus dem Siedekühler 40 austreten.

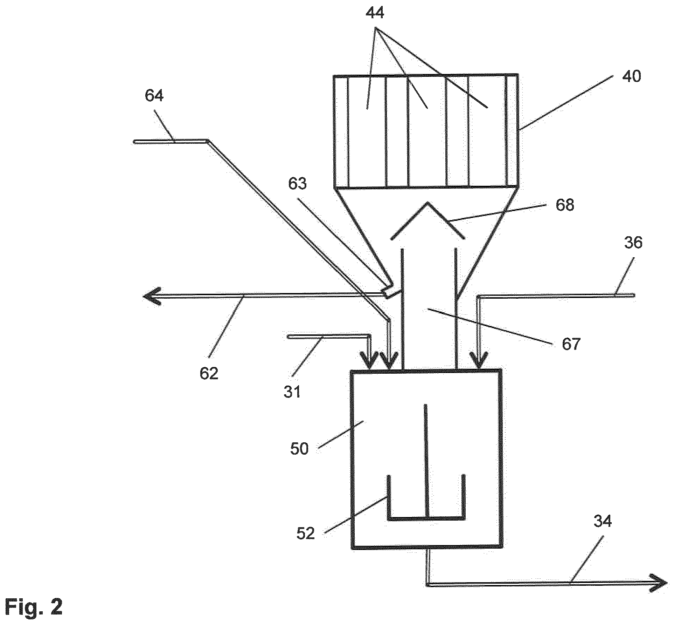

Figur 2 zeigt eine detaillierte schematische Darstellung eines unteren Bereichs des Siedekühlers 40 des in Figur 1 dargestellten Systems 10 zur Herstellung eines Polymers. Dabei sind insbesondere der untere Bereich des Siedekühlers 40, welcher sich unterhalb der Rohre 44 befindet, und an welchen die Abscheideleitung 62 und der Reaktor 50 angeschlossen sind, dargestellt.

Der untere Bereich des Siedekühlers 40 ist annähernd trichterförmig gestaltet. Ein Steigrohr 67 erstreckt sich von dem Reaktor 50 in den trichterförmigen unteren Bereich des Siedekühlers 40 hinein. Oberhalb des Steigrohrs 67 und unterhalb der Rohre 44 ist eine Abdeckung 68 angeordnet. Die Abdeckung 68 ist derart gestaltet, dass aus den Rohren 44 mit der Schwerkraft nach unten fließende Brüden sowie Monomere auf die Abdeckung 68 auftreffen und seitlich zu einer Innenwand des trichterförmigen unteren Bereichs geleitet werden. Die Abdeckung 68 verhindert somit, dass aus den Rohren 44 mit der Schwerkraft nach unten fließende Brüden sowie Monomere in das Steigrohr 67 fallen und in den Reaktor 50 fließen.

An einer Außenwand des trichterförmigen unteren Bereichs des Siedekühlers 40 ist ein Ablaufstutzen 63 angebracht. An den Ablaufstutzen 63 ist die Abscheideleitung 62 angeschlossen. Die aus den Rohren 44 mit der Schwerkraft nach unten fließenden Brüden sowie Monomere fließen durch den Ablaufstutzen 63 als Produktstrom in die Abscheideleitung 62 und weiter zu dem Abscheidegefäß 60.

In dem Reaktor 50 findet unter Rühren mit dem Rührer 52 eine Polymerisation der Monomere statt. Bei der Polymerisation entsteht Reaktionswärme. Die Reaktionswärme bewirkt, dass gasförmige Brüden aus dem Reaktor 50 in den Siedekühler 40 aufsteigen. Die in dem Reaktor 50 entstehenden gasförmigen Brüden steigen dabei in den vertikal verlaufenden Rohren 44 des Siedekühlers 40 auf und werden dort abgekühlt. Dadurch kondensieren die Brüden, und der Produktstrom, der die kondensierten Brüden enthält, fließt zu dem Abscheidegefäß 60.

Die bei der Polymerisation entstehende Polymermasse enthält einen Feststoffgehalt von etwa 50% - 80%, bevorzugt 60% - 70%. Die Polymermasse wird dann über die Ausgangsleitung 34 der Entgasungseinheit 70 zugeleitet. In der Entgasungseinheit 70 werden die flüchtigen Bestandteile, insbesondere Lösemittel und nicht umgesetzte Monomere, aus der Polymermasse entfernt. Über die Entnahmeleitung 38 wird das hergestellte Polymer, welches nunmehr zumindest weitgehend frei von flüchtigen Bestandteilen ist, dem System 10 entnommen.

Das aus der Polymermasse entfernte Lösemittel sowie die nicht umgesetzten Monomere werden durch die Kondensationseinheit 71 und den Sammelbehälter 80 geführt und über die erste Rückführleitung 36 eventuell teilweise wieder in den Reaktor 50 zurück geleitet oder über die zweite Rückführleitung 35 ganz oder teilweise wieder in den Siedekühler 40 zurück geleitet.

Die Komponenten liegen in flüssiger Form vor. Die Komponenten werden über die Einfüllöffnungen 46 in die Haube 42 des Siedekühlers 40 in den Siedekühler 40 zugegeben. Über die Düsen 48 in der Haube 42 des Siedekühlers 40 werden die Komponenten in die vertikal verlaufenden Rohre 44 des Siedekühlers 40 verteilt. Dabei fallen die Komponenten von oben mit der Schwerkraft in die vertikal verlaufenden Rohre 44 des Siedekühlers 40.

Bedingt durch die Reaktionswärme, die durch die Polymerisation in dem Reaktor 50 entsteht, steigen weiterhin gasförmige Brüden entgegen der Schwerkraft aus dem Reaktor 50 in die vertikal verlaufenden Rohre 44 des Siedekühlers 40 auf. Dort werden die Brüden abgekühlt und kondensieren. Dabei findet eine Vermischung der kondensierten Brüden mit den Komponenten, die von oben mit der Schwerkraft über die zweite Zuführleitung 32 in die vertikal verlaufenden Rohre 44 des Siedekühlers 40 eingefüllt werden, sowie mit Stoffen, die über die zweite Rückführleitung 35 zugeführt werden, statt.

Die kondensierten Brüden fließen anschließend mit den über die zweite Zuführleitung 32 in den Siedekühler 40 eingefüllten Komponenten und mit den über die zweite Rückführleitung 35 zugeführten Stoffen als Produktstrom von dem Siedekühler 40 mit der Schwerkraft zu dem Abscheidegefäß 60.

In dem Abscheidegefäß 60 setzt sich eine wässrige Phase unten ab, und unmittelbar oberhalb der wässrigen Phase entsteht eine Trennschicht. Die wässrige Phase wird, gegebenenfalls mit der Trennschicht, durch den Abfluss 66 aus dem Abscheidegefäß 60 abgelassen. Somit werden die wässrige Phase und die Trennschicht von dem Produktstrom, welcher die kondensierten Brüden und die in den Siedekühler 40 eingefüllten Komponenten enthält, abgetrennt.

Ein Produktstrom, welcher fast ausschließlich kondensierte Brüden, in den Siedekühler 40 eingefüllte Komponenten, also Monomere, sowie Lösemittel enthält, wird über die Zulaufleitung 64 mit der Schwerkraft dem Reaktor 50 zugeführt. Die Zulaufleitung 64 ist dabei oberhalb der wässrigen Phase an dem Abscheidegefäß 60 angebracht. Der Produktstrom verlässt das Abscheidegefäß 60 somit oberhalb der wässrigen Phase.

Das hier beschriebene Verfahren zur Herstellung eines Polymers basiert auf einem kontinuierlichen Prozess. Die Komponenten werden kontinuierlich ganz oder zumindest teilweise über die zweite Zuführleitung 32 in den Siedekühler 40 zugegeben, beziehungsweise höchstens teilweise über die erste Zuführleitung 31 in den Reaktor 50 zugegeben. Monomere, die über erste Zuführleitung 31 in den Reaktor 50 oder über die zweite Zuführleitung 32 in den Siedekühler 40 zugegeben werden, und welche nicht über die Entgasungseinheit 70 und die Kondensationseinheit 71 zurückgeführt werden, werden auch als Frischmonomere bezeichnet.

Das hergestellte Polymer wird ebenso kontinuierlich über die Entnahmeleitung 38 entnommen. Das Lösemittel befindet sich dabei in einem Umlauf in dem System 10. Das Lösemittel wird aus der Kondensationseinheit 71 über die erste Rückführleitung 36 höchstens teilweise dem Reaktor 50 oder über die zweite Rückführleitung 35 ganz oder teilweise dem Siedekühler 40 zugeführt.

Die Erfindung wird durch die Beispiele, Figuren und Ansprüche weiter erläutert.

Bei einem aus dem Stand der Technik bekannten Verfahren zur Herstellung eines Polymers (SAN) wurden die in dem Siedekühler 40 kondensierten Brüden zusammen mit Lösemittel und nicht umgesetzten Monomeren unmittelbar in den Reaktor 50 zurückgeführt.

Das hergestellte Polymer wurde kontinuierlich entnommen und nachfolgend zu Granulat weiterverarbeitet. Nach etwa sechs Monaten wurden Oberflächendefekte an Werkstücken beobachtet, die durch Spritzguss aus dem hergestellten Granulat erzeugt wurden. Eine daraufhin durchgeführte Kontrolle des Reaktors ergab Ablagerungen und Anwachsungen am Schaft des Rührers 52 sowie an Teilen der Wandung des Reaktors 50. Es wurde ohne Reinigung weitergefahren.

Nach weiteren etwa 3 bis 6 Monaten wurden auch rote Partikel in dem Granulat gefunden. Eine daraufhin durchgeführte Kontrolle des Reaktors 50 ergab neben einer weiteren Zunahme der oben erwähnten Ablagerungen und Anwachsungen Anteile an rötlichem Material innerhalb der Ablagerungen und Anwachsungen. Zur Beseitigung dieser störenden Bestandteile musste der Reaktor 50 gereinigt werden.

In einem Versuch zur Herstellung eines Polymers (SAN) mittels des erfindungsgemäßen Verfahrens in einem erfindungsgemäßen System 10 wurde der Produktstrom aus dem Siedekühler 40 über das Abscheidegefäß 60 in den Reaktor 50 zurückgeführt. Das hergestellte Polymer wurde kontinuierlich entnommen und nachfolgend zu Granulat weiterverarbeitet.

Es dauerte vorliegend etwa zwei Jahre, bis Oberflächendefekte an Werkstücken beobachtet wurden, die durch Spritzguss aus dem hergestellten Granulat erzeugt wurden. Rote Partikel wurden innerhalb von zwei Jahren in dem Granulat nicht gefunden. Nach etwa 2 Jahren wurde ebenfalls eine Kontrolle des Reaktors 50 durchgeführt. Dabei wurden nur geringen Mengen an Anwachsungen und Ablagerungen von Polymer am Schaft des Rührers 52 sowie an den Wandungen des Reaktors 50 gefunden.

### Bezugszeichenliste

- 10: System
- 31: erste Zuführleitung
- 32: zweite Zuführleitung
- 33: Einfüllleitung
- 34: Ausgangsleitung
- 35: zweite Rückführleitung
- 36: erste Rückführleitung
- 38: Entnahmeleitung
- 40: Siedekühler
- 42: Haube
- 44: Rohr
- 46: Einfüllöffnung
- 48: Düse
- 49: Abgasleitung
- 50: Reaktor
- 52: Rührer
- 60: Abscheidegefäß
- 62: Abscheideleitung
- 63: Ablaufstutzen
- 64: Zulaufleitung
- 66: Abfluss
- 67: Steigrohr
- 68: Abdeckung
- 70: Entgasungseinheit
- 71: Kondensationseinheit
- 80: Sammelbehälter
- 82: Wärmetauscher

## Patentansprüche

1. Verfahren zur Herstellung eines Polymers aus mindestens einer ersten Komponente und einer zweiten Komponente mittels eines Reaktors (50), wobei
in dem Reaktor (50) entstehende Reaktionswärme über einen Siedekühler (40) abgeführt wird, indem
in dem Reaktor (50) entstehende gasförmige Brüden dem Siedekühler (40) zugeführt werden,
**dadurch gekennzeichnet, dass**
ein kondensierte Brüden enthaltender Produktstrom von dem Siedekühler (40) über ein Abscheidegefäß (60) in den Reaktor (50) zurück geführt wird, wobei
der Produktstrom vor dem Eintritt in das Abscheidegefäß (60) in einem Wärmetauscher (82) gekühlt wird, wobei
die erste Komponente und/oder die zweite Komponente zumindest teilweise über den Siedekühler (40) zugeführt werden und
von dem Siedekühler (40) über das Abscheidegefäß (60) in den Reaktor (50) gelangen, wobei
in dem Abscheidegefäß (60) eine wässrige Phase von dem Produktstrom abgetrennt wird, und wobei
der Produktstrom von dem Abscheidegefäß (60) mit der Schwerkraft in den Reaktor (50) fließt.

2. Verfahren nach Anspruch 1, **dadurch gekennzeichnet, dass**
die erste Komponente Styrol enthält, und dass die zweite Komponente Acrylnitril enthält.

3. Verfahren nach einem der vorstehenden Ansprüche, **dadurch gekennzeichnet, dass** die zweite Komponente Acrylnitril enthält, und dass die erste Komponente Alpha-Methylstyrol enthält.

4. Verfahren nach einem der vorstehenden Ansprüche, **dadurch gekennzeichnet, dass** die erste Komponente Styrol enthält, und dass die zweite Komponente Methylmethacrylat enthält.

5. Verfahren nach einem der vorstehenden Ansprüche, **dadurch gekennzeichnet, dass** in dem Abscheidegefäß (60) eine oberhalb der wässrigen Phase entstehende Trennschicht von dem Produktstrom abgetrennt wird.

6. Verfahren nach einem der vorstehenden Ansprüche, **dadurch gekennzeichnet, dass** die erste Komponente und/oder die zweite Komponente teilweise direkt dem Reaktor (50) zugeführt werden.

7. Verfahren nach einem der vorstehenden Ansprüche, **dadurch gekennzeichnet, dass** die erste Komponente und/oder die zweite Komponente zumindest teilweise in flüssiger Form dem Siedekühler (40) und/oder dem Reaktor (50) zugeführt werden.

8. Verfahren nach einem der vorstehenden Ansprüche, **dadurch gekennzeichnet, dass**
Lösemittel sowie nicht umgesetzte Monomere der ersten Komponente und/oder der zweiten Komponente von einer Kondensationseinheit (71) über eine Rückführleitung (35) in den Siedekühler (40) zurückgeführt werden.

9. System zur Herstellung eines Polymers aus mindestens einer ersten Komponente und einer zweiten Komponente, umfassend einen Reaktor (50) und
einen Siedekühler (40) zur Abführung von in dem Reaktor (50) entstehender Reaktionswärme, **dadurch gekennzeichnet, dass**
zwischen dem Siedekühler (40) und dem Reaktor (50) ein Abscheidegefäß (60) derart angeordnet ist, dass ein kondensierte Brüden enthaltender Produktstrom von dem Siedekühler (40) über das Abscheidegefäß (60) in den Reaktor (50) zurück geführt wird, dass
zwischen dem Siedekühler (40) und dem Abscheidegefäß (60) ein Wärmetauscher (82) derart angeordnet ist, dass der Produktstrom vor dem Eintritt in das Abscheidegefäß (60) in dem Wärmetauscher (82) gekühlt wird, und dass
der Reaktor (50), der Siedekühler (40) und das Abscheidegefäß (60) derart angeordnet sind, dass
der Produktstrom von dem Abscheidegefäß (60) mit der Schwerkraft in den Reaktor (50) fließt, wobei
der Siedekühler (40) mindestens eine Einfüllöffnung (46) zum Einfüllen der ersten Komponente und/oder der zweiten Komponente aufweist, und wobei
der Reaktor (50), der Siedekühler (40) und das Abscheidegefäß (60) derart angeordnet sind, dass
in dem Reaktor (50) entstehende Brüden entgegen der Schwerkraft in den Siedekühler (40) aufsteigen, und dass
der Produktstrom mit der Schwerkraft in das Abscheidegefäß (60) fließt.

## Claims

1. A process for producing a polymer from at least one first component and a second component by means of a reactor (50), wherein
heat of reaction arising in the reactor (50) is removed by means of a evaporative cooler (40) by
feeding gaseous vapors formed in the reactor (50) to the evaporative cooler (40), **characterized in that**
a product stream containing condensed vapors is recirculated from the evaporative cooler (40) via a separator vessel (60) to the reactor (50), wherein
the product stream is cooled in a heat exchanger (82) before entering the separator vessel (60), wherein
the first component and/or the second component are introduced at least partially via the evaporative cooler (40), and
goes/going via the separator vessel (60) from the evaporative cooler (40) into the reactor (50), wherein
an aqueous phase is separated off from the product stream in the separator vessel (60), and wherein
the product stream flows from the separator vessel (60) under the force of gravity into the reactor (50).

2. The process as claimed in claim 1, **characterized in that**
the first component contains styrene, and **in that** the second component contains acrylonitrile.

3. The process as claimed in one of the preceding claims, **characterized in that** the second component contains acrylonitrile, and **in that** the first component contains alphamethylstyrene.

4. The process as claimed in one of the preceding claims, **characterized in that** the first component contains styrene, and **in that** the second component contains methyl methacrylate.

5. The process as claimed in one of the preceding claims, **characterized in that**
in the separator vessel (60) a separation layer formed above the aqueous phase is separated off from the product stream.

6. The process as claimed in one of the preceding claims, **characterized in that** the first component and/or the second component are partly introduced directly to the reactor (50).

7. The process as claimed in one of the preceding claims, **characterized in that** the first component and/or the second component are fed at least partially in liquid form to the evaporative cooler (40) and/or the reactor (50).

8. The process as claimed in one of the preceding claims, **characterized in that**
solvents and unreacted monomers of the first component and/or the second component are recirculated from a condensation unit (71) via a return conduit (35) into the evaporative cooler (40).

9. A system for producing a polymer from at least one first component and a second component, comprising
a reactor (50) and
an evaporative cooler (40) for removing heat of reaction arising in the reactor (50), **characterized in that**
a separator vessel (60) is arranged between the evaporative cooler (40) and the reactor (50) in such a way that a product stream containing condensed vapors is conveyed from the evaporative cooler (40) via the separator vessel (60) back into the reactor (50) **in that** a heat exchanger (82) is arranged between the evaporative cooler (40) and the separator vessel (60) in such a way that the product stream is cooled in the heat exchanger (82) before entering into the separator vessel (60), and **in that**
the reactor (50), the evaporative cooler (40) and the separator vessel (60) are arranged in such a way that
the product stream flows from the separator vessel (60) under the force of gravity into the reactor (50), wherein
the evaporative cooler (40) has at least one feed opening (46) for introducing the first component and/or the second component, and wherein
the reactor (50), the evaporative cooler (40) and the separator vessel (60) are arranged in such a way that
vapors formed in the reactor (50) ascends against the force of gravity into the evaporative cooler (40), and **in that**
the product stream flows under the force of gravity into the separator vessel (60).

## Revendications

1. Procédé pour la préparation d'un polymère à partir d'au moins un premier composant et un second composant au moyen d'un réacteur (50), dans lequel la chaleur réactionnelle produite dans le réacteur (50) est évacuée par l'intermédiaire d'un refroidisseur par évaporation (40), en amenant
des vapeurs gazeuses produites dans le réacteur (50) vers le refroidisseur par évaporation (40),
**caractérisé en ce que**
un flux de produit contenant des vapeurs condensées est renvoyé du refroidisseur par évaporation (40) par l'intermédiaire d'un récipient de séparation (60) jusque dans le réacteur (50),
le flux de produit étant refroidi dans un échangeur de chaleur (82) avant d'entrer dans le récipient de séparation (60),
le premier composant et/ou le second composant étant amenés au moins partiellement par l'intermédiaire du refroidisseur par évaporation (40) et
parvenant du refroidisseur par évaporation (40) dans le réacteur (50) par l'intermédiaire du récipient de séparation (60),
une phase aqueuse étant séparée du flux de produit dans le récipient de séparation (60), et
le flux de produit s'écoulant sous l'effet de la gravité du récipient de séparation (60) jusque dans le réacteur (50).

2. Procédé selon la revendication 1, **caractérisé en ce que**
le premier composant contient du styrène et **en ce que** le second composant contient de l'acrylonitrile.

3. Procédé selon l'une quelconque des revendications précédentes, **caractérisé en ce que** le second composant contient de l'acrylonitrile et **en ce que** le premier composant contient de l'alpha-méthylstyrène.

4. Procédé selon l'une quelconque des revendications précédentes, **caractérisé en ce que** le premier composant contient du styrène et **en ce que** le second composant contient du méthacrylate de méthyle.

5. Procédé selon l'une quelconque des revendications précédentes, **caractérisé en ce que**, dans le récipient de séparation (60), une couche de séparation se formant au-dessus de la phase aqueuse est séparée du flux de produit.

6. Procédé selon l'une quelconque des revendications précédentes, **caractérisé en ce que** le premier composant et/ou le second composant sont partiellement amenés directement jusque dans le réacteur (50).

7. Procédé selon l'une quelconque des revendications précédentes, **caractérisé en ce que** le premier composant et/ou le second composant sont amenés au moins partiellement sous forme liquide jusque dans le refroidisseur par évaporation (40) et/ou jusque dans le réacteur (50).

8. Procédé selon l'une quelconque des revendications précédentes, **caractérisé en ce que**
des solvants et des monomères n'ayant pas réagi du premier composant et/ou du second composant sont renvoyés d'une unité de condensation (71) jusque dans le refroidisseur par évaporation (40) par l'intermédiaire d'une conduite de recyclage (35).

9. Système pour la préparation d'un polymère à partir d'au moins un premier composant et un second composant, comprenant
un réacteur (50) et
un refroidisseur par évaporation (40) pour l'évacuation de la chaleur de réaction produite dans le réacteur (50), **caractérisé en ce que**
un récipient de séparation (60) est disposé entre le refroidisseur par évaporation (40) et le réacteur (50), de telle sorte qu'un flux de produit contenant des vapeurs condensées soit renvoyé du refroidisseur par évaporation (40) jusque dans le réacteur (50) par l'intermédiaire du récipient de séparation (60), **en ce que**
un échangeur de chaleur (82) est disposé entre le refroidisseur par évaporation (40) et le récipient de séparation (60), de telle sorte que le flux de produit soit refroidi dans l'échangeur de chaleur (82) avant d'entrer dans le récipient de séparation (60), et **en ce que**
le réacteur (50), le refroidisseur par évaporation (40) et le récipient de séparation (60) sont disposés de telle sorte que
le flux de produit s'écoule sous l'effet de la gravité du récipient de séparation (60) jusque dans le réacteur (50),
le refroidisseur par évaporation (40) présentant au moins une ouverture de remplissage (46) pour le remplissage du premier composant et/ou du second composant, et
le réacteur (50), le refroidisseur par évaporation (40) et le récipient de séparation (60) sont disposés de telle sorte que
les vapeurs produites dans le réacteur (50) montent dans le refroidisseur par évaporation (40) en s'opposant à la gravité, et **en ce que**
le flux de produit s'écoule sous l'effet de la gravité dans le récipient de séparation (60).
